(19) **Europäisches Patentamt**
**European Patent Office**
**Office européen des brevets**

(11) **EP 4 506 713 A1**

(12) **EUROPEAN PATENT APPLICATION**

(43) Date of publication:
**12.02.2025   Bulletin 2025/07**

(21) Application number: **23190798.1**

(22) Date of filing: **10.08.2023**

(51) International Patent Classification (IPC):
**G01S 5/02** *(2010.01)*       **G01S 5/00** *(2006.01)*
**G01S 3/00** *(2006.01)*       **B60W 40/00** *(2006.01)*
**G08G 1/16** *(2006.01)*

(52) Cooperative Patent Classification (CPC):
**G01S 5/0036; G01S 5/0236; H04W 64/006;**
B60W 40/00; G01S 3/00; G01S 2205/01;
G08G 1/166

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Hassan, Khaled Shawky**
**31157 Sarstedt (DE)**
• **Giesselmann, Timo**
**70567 Stuttgart (DE)**
• **Jornod, Guillaume**
**10243 Berlin (DE)**
• **Stark, Maximilian**
**20249 Hamburg (DE)**

(54) **A METHOD FOR ENABLING A POSITIONING PROCEDURE**

(57)     The invention relates to a method (100) for enabling a positioning procedure, comprising the following steps at a device (10) in a communications network (1):
- Determining (101) a position (52) and an orientation of an antenna (11) in relation to a reference point (51) and/or a reference mapping system (50) for the device (10), wherein the reference point (51) of the device (10) is defined by a reference position (51) based on the reference mapping system (50),
- Mapping (102) the orientation of the antenna (11) in relation to an orientation of the device (10), wherein the orientation of the device (10) is specified by an orientation information based on the reference mapping system (50),
- Generating (103) a message comprising the determined position and the mapped orientation of the antenna (11) of the device (10),
- Transmitting (104) the message to at least one further entity (20) in the communications network (1) to enable a positioning procedure.

**Fig. 1**

EP 4 506 713 A1

## Description

The invention relates to a method for enabling a positioning procedure. Furthermore, the invention relates to a transmitting and a receiving device for this purpose.

State of the art

Positioning over radio-waves has become a ubiquitous aspect of modern technology. Numerous applications rely on this well-known approach, with various systems playing crucial roles in global navigation services, object localization, and emergency phone tracking. Among these systems, GNSS (Global Navigation Satellite System) takes a vital role, while radio-based positioning and cellular communication networks also hold significant importance. The underlying principle behind most of these systems involves the utilization of time-of-flight or time-of-arrival methods. In this paradigm, anchor nodes emit a known reference signal, allowing target nodes or target devices to measure the time it takes for the signal to travel from transmission to reception. By involving enough anchor nodes, the system can calculate individual ranges and convert them into precise x, y, and z coordinates using triangulation methods. Therefore, tight synchronization requirements in positioning systems must be met to be able to precisely determine the Time Difference of Arrival (TDoA) and convert it into a physical distance. In the context of 5G positioning, angular methods are supported for network-based positioning, such as UL-AoA (Uplink Angle of Arrival) and DL-AoD (Downlink Angle of Departure) introduced in Rel. 16 and Rel. 17 of 3GPP NR-based positioning. However, the current methods may still not be sufficient to achieve the necessary level of accuracy of the positioning calculations.

Disclosure of the invention

It is therefore an object of the present invention to at least partially overcome the disadvantages described above. In particular, it is an object of the present invention, to provide a method to improve the accuracy of computations for a positioning procedure and to enable more reliable positioning and orientation estimates.

The above object is solved by a method with the features of claim 1, a Transmitting device with the features of claim 10 and a Receiving device with the features of claim 11, further by a respective computer program and a computer-readable medium. Further features and details of the invention are disclosed in the respective dependent claims, the description, and the drawings. Features and details described in connection with the inventive method also apply to the inventive user equipment as well as the inventive Reduced capability user equipment, and vice versa in each case, so that with respect to the disclosure concerning the individual aspects of the invention reference can always be made mutually.

The object is particularly solved by a method for enabling a positioning procedure. The method comprises the following steps at a device, which is located in a communications network:

- Determining a position and an orientation of an antenna in relation to a reference point and/or a reference mapping system for the device, wherein the reference point of the device is defined by a reference position based on the reference mapping system,
- Mapping the orientation of the antenna in relation to an orientation of the device, wherein the orientation of the device is specified by an orientation information based on the reference mapping system,
- Generating a message comprising the determined position and the mapped orientation of the antenna of the device,
- Transmitting the message to at least one further entity in the communications network to enable a positioning procedure.

This allows to obtain the necessary information that enhances the accuracy and reliability of the positioning procedure. Further, this has the advantage that additional information can be used to improve the accuracy of a position estimation. Knowing the antenna's orientation at a certain time point, for example the current time point, allows to better interpret signal arrival angles and thus, advantageously leading to more accurate localization. Furthermore, understanding the antenna's orientation allows to better model and compensate for multipath effects such as reflections or scattering of signals of surrounding objects. A reference mapping system can be understood as a mechanism, which can be used to associate the orientation or direction of a device with its position in 3D space. This system establishes a relationship between the physical orientation of the device and its spatial location.

The reference point can be defined as a predefined location or position within the reference mapping system to specify various positions of the device in relation to this reference point. This point advantageously simplifies the computations in relation to positioning.

It is possible that during the determining step the method comprises at least one of the further steps:

- Mapping the spatial dimensions of the device to the reference mapping system, wherein the spatial dimensions comprise a length, a width, and a height of the device,
- Mapping the reference position of the device to the reference mapping system, wherein the reference position is specified by a position comprising coordinates x, y, z.

This has the advantage that real physical dimensions of a device can be transformed into respective data to obtain the orientation information of an antenna system of a device, which can be advantageously utilized by another device, which received the messaging.

A spatial dimension of a device can be understood as a number of coordinates needed to specify the position of the device within a given reference frame. The spatial dimensions in a three-dimensional space refer to length (along the x-axis), width (along the y-axis), and height (along the z-axis).

It is further possible that during the mapping step the method comprises at least one of the further steps:

- Mapping the position of the antenna to the reference position of the reference mapping system, wherein the position is specified by a coordinate and an offset in relation to the reference position of the device,
- Mapping the orientation of the antenna in relation to a horizontal plane of the reference mapping system and a direction of movement of the device.

This mapping allows to derive the appropriate orientation coordinate information, which can be advantageously used by a further device to be able to extract and to compute the orientation information.

It is conceivable that the message comprises an antenna orientation measurement report, wherein the antenna orientation measurement report comprises the mapped orientation of the antenna, an antenna orientation measurement time stamp, and/or antenna assisting information such as an antenna type, an antenna size and/or an antenna model or the like. It is a further possibility that the transmitting of the message is carried out periodically and/or triggered by an event such as a request.

This has the advantage that the information can be conveyed in a significantly better structured and standardized way to other entities in the communications network. Further, this enables an improved exchange of information, in particular orientation information, between these entities such as between a user equipment and a node in the communications network or between two user devices in the communications network. Furthermore, the possibility to transmit such a message or report regularly or on request improves the flexibility of distributing these reports based on the current situation in the communications network or based on the current load in the network.

It is possible that the reference mapping system for the device is based on an orientation mapping function, wherein the orientation mapping function specifies a mapping of the orientation of the antenna in relation to an orientation of the device and/or a mapping of a position of the antenna in relation to the device. This allows to combine the orientation and position data of the device more efficiently and effectively. Further this has the advantage that the orientation mapping function advantageously can completely represent the spatial state and dimensions of the device, including its 3D position and orientation. This combined output advantageously provides a better and comprehensive understanding of where the device is located in space and how it is oriented relative to a given reference system. A reference mapping system such as an orientation mapping function can be understood as a technique or mechanism, which can be used to associate the orientation or direction of a device with its position in 3D space. This function establishes a relationship between the physical orientation of the device and its spatial location. This function may comprise trigonometric calculations, matrix transformations, quaternion operations, or other mathematical techniques.

It is possible that the reference mapping system for the device is based on a bounding box concept, wherein the bounding box specifies the reference point based on a coordinate of the bounding box and/or wherein the bounding box maps the spatial dimensions of the device in relation to a length, a width, and a height of the device. It is further possible, that the reference point (51) is based on a position in a coordinate system with a x-, y-, and/or z-axis.

The utilization of such a system allows to efficiently represent the position and size of the device in an easier or simpler way. Further, this allows to improve the mapping by representing the extents of spatial datasets, making it easier to manage and index large datasets. Furthermore, the bounding box allows to advantageously define the spatial dimensions or boundaries of devices in a simple way. A reference mapping system such as a bounding box can be defined as a geometric representation for example for a device and can be used to define the spatial boundaries or dimensions of the device. It is a kind of a virtual box that surrounds the device, and its sides are aligned with the coordinate axes (x, y, and z in 3D space). The bounding box is typically defined by its minimum and maximum coordinates along each axis.

It may be a possibility that the at least one further entity comprises a node, a management function of the communications network, and/or a further device. Transmitting the orientation information to another entity enables this entity to utilize the received information for enabling a positioning procedure such as for example for computing its relative position.

Another aspect of the invention is a transmitting device for enabling a positioning procedure. The device comprises an antenna, a transceiver, which is connected with the antenna, a memory, and a processor. The processor is connected to the memory, the transceiver, and the antenna. The transmitting device comprises a reference mapping system of the transmitting device. The processor of the device is configured to carry out any one of the method steps of the inventive method. Thus, the transmitting device according to the invention brings the same advantages as have been described in detail with reference to the inventive method.

Another aspect of the invention is a receiving device for enabling a positioning procedure. The receiving device is configured to carry out the following steps:

- Extracting an orientation of an antenna of a transmitting device from a message transmitted by the transmitting device according to the steps of the inventive method,
- Mapping the extracted orientation information based on an orientation mapping function of the transmitting device,
- Determining a relative position of the transmitting device based on the mapped antenna orientation.

Thus, the receiving device according to the invention brings the same advantages as have been described in detail with reference to the inventive method.

According to a further aspect, there is provided a computer program comprising instructions to cause

- the inventive transmitting device, or its respective embodiments, to executive the steps of the inventive method, or its respective embodiments, and/or
- the inventive receiving device to

    ○ extract an orientation of an antenna of a transmitting device from a message transmitted by the transmitting device according to the steps of the inventive method,
    ○ map the extracted orientation information based on an orientation mapping function of the transmitting device, and
    ○ determine a relative position of the transmitting device based on the mapped antenna orientation.

According to a further aspect, there is provided a computer-readable medium having stored thereon the above-mentioned computer program.

Further advantages, features and details of the invention will be apparent from the following description, in which embodiments of the invention are described in detail with reference to the drawings. In this context, the features mentioned in the claims and in the description may each be essential to the invention individually or in any combination. Showing:

Fig. 1     A schematic diagram of a prior art positioning concept,

Fig. 2     A schematic diagram of a further prior art positioning concept,

Fig. 3:    A method according to embodiments of the invention,

Fig. 4     A schematic diagram of an embodiment of the invention,

Fig. 5     A schematic diagram of a further embodiment of the invention.

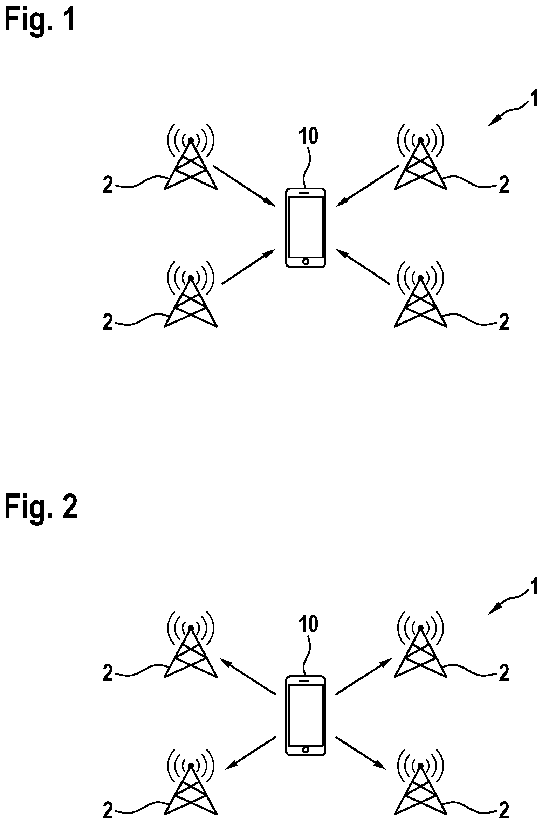

In Fig. 1 a schematic diagram of a prior art positioning procedure is shown. Fig. 1 shows a communications network 1, for example a cellular network. The communications network 1 comprises several nodes 2. Each node 2 is communicatively connected with a device 10 such as a user equipment depicted in Fig. 1. Further, Fig. 1 illustrates a well-known approach of a positioning procedure in the communications network 1, which is called downlink time difference of arrival (downlink TDoA). A lot of such concepts rely on so-called time-of-flight or time-of-arrival methods. The nodes 2 or also called anchor nodes 2 for this purpose transmit a known reference signal and the target, which in Fig. 1 is depicted as a user equipment 10 measures the time between the transmission and reception of the signal. If enough anchor nodes 2 are involved, the individual ranges can be converted into a position in x-, y-, z-coordinates. This approach is called triangulation.

Based on this approach a user equipment 10 can be located by multiple nodes 2 or also called base stations 2.

In Fig. 2 a schematic diagram of a second prior art positioning procedure is shown, which illustrates a time-of-arrival method in relation to an uplink scenario that is based on the Uplink Time difference of arrival (TDoA) concept. In this case, the user equipment 10 or device 10 sends a signal for positioning purposes to the reference nodes 2. Each reference node 2 (anchor) receives the signal transmitted by the device 10. The nodes 2 have synchronized clocks to accurately timestamp when the signal arrives. The reference nodes 2 measure the time difference of arrival (TDoA) of the signal. By comparing the arrival times of the signal at different reference nodes 2, the time can be determined for the signal, which it takes to travel from the device 10 to each node 2. The TDoA measurements from the reference nodes 2 are combined and processed to calculate the time taken for the signal to reach each node 2 relative to a common reference time. These TDoA values are then used to determine the position of the device 10. Further, in addition to multiple range measurements, the number of unknowns in the positioning task can also be reduced by considering angular measurements.

In 5G positioning, angular methods can be supportive for the network-based positioning. Using a linear array, the angle of incident of a wavefront can be determined by measuring the phase offsets of the radio-waves received at each antenna. In addition to a linear array, this idea can be also applied to 2D planar antenna apertures. In this case the azimuth and elevation angle need to be determined. As a result, the time-of-flight and two angles can be determined already using only one device 10 and one anchor node 2 considering angular methods. So far, linear arrays were considered, here the angular resolution depends on the number of antennas. In general, the angular resolution can be computed as:

$$\Delta\Theta = 1.22\ \lambda 0/L$$

where L is the size of the aperture and is often modelled as $N \cdot d$. Where N is the number of antennas, d is the antenna spacing and $\lambda 0$ is the wavelength.

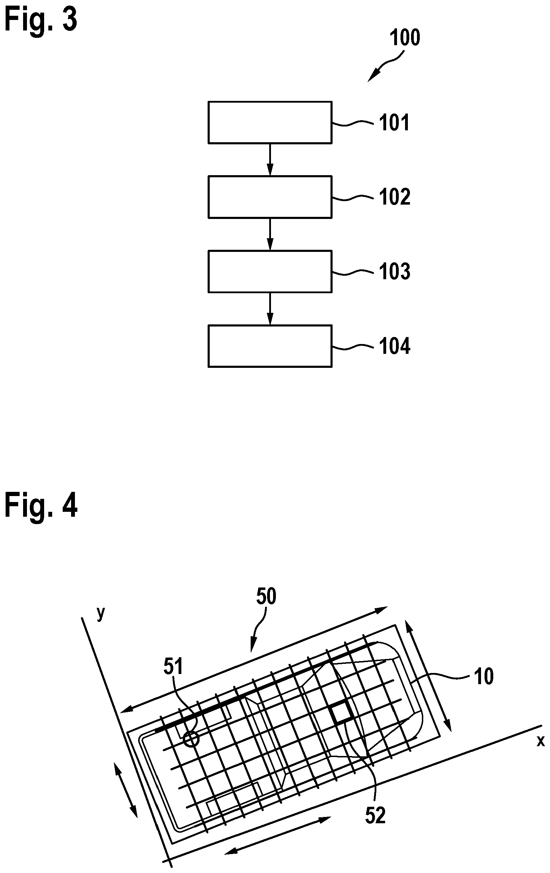

Fig. 3 shows a method 100 according to embodiments of the invention. Fig. 1 illustrates a method 100 for enabling a positioning procedure, which comprises the following steps at a device 10 in a communications network 1: In step 101 a position and an orientation of an antenna 11 is determined in relation to a reference point 51 and a reference mapping system 50 for the device 10. The reference point 51 of the device 10 is defined by a reference position in the reference mapping system 50. Then, in step 102 the orientation of the antenna 11 is mapped in relation to an orientation of the device 10. The orientation of the device 10 is specified by a position and an orientation information based on the reference mapping system 50. At step 103 a message is generated. The message comprises the determined position 51 and the mapped orientation of the antenna 11 of the device 10. In step 104 the message is transmitted to at least one further entity 20 in the communications network 1 to enable a positioning procedure. The at least one further entity 20 can comprise a node, a management function of the communications network 1, and/or a further device 20.

In Fig. 4 a schematic diagram of an embodiment of the invention is depicted. Fig. 4 illustrates an exemplary reference mapping system 50 according to embodiments of the invention. Further, in this embodiment the device 10 comprises a vehicle 10. The spatial dimensions of the vehicle 10 such as its length, its width and its height can be defined by a reference mapping system 50. The reference mapping system 50 comprises a bounding box 50. The bounding box 50 comprises a local coordinate system x, y, z. Further the bounding box comprises a reference point 51, which as depicted in Fig. 4 is the Vehicle Reference Point 51. The Vehicle Reference Point (VRP) 51 is defined as a reference position in the local coordinate system of the bounding box 50. The VRP 51 comprises the coordinates (x, y, z) = (0, 0, 0). The VRP 51 is not necessarily the center of the bounding box 50. The bounding box 50 is defined by its length, width, and height, together with offsets to the VRP 51 in each axis and can be represented as

- BB_length
- BB_width
- BB_height
- BB_x_offset
- BB_y_offset
- BB_z_offset .

The bounding box 50 can comprise an antenna position 52 (AP). The antenna position 52 is mapped in relation to the VRP 51 (offset). The orientation of the antenna at its position 52 is mapped in relation to a horizontal plane and the direction of driving and comprises for example an orientation information represented as

- AP_x_offset
- AP_y_offset
- AP_z_offset
- AP_roll
- AP_yaw
- AP_pitch .

The three first elements are corresponding to the position and the last three refers to the orientation. Alternatively, the orientation information can be represented as a rotation vector using quaternions instead of yaw, pitch, roll i.e.

- AP_c
- AP_xs
- AP_ys
- AP_zs.

A quaternion is a concept used to represent rotations and orientations in a 3D space. A quaternion is defined as a four-dimensional vector of the form:

$$q = a + bi + cj + dk$$

where:

q is the quaternion, a, b, c, and d are real numbers, and i, j, and k are the quaternion's imaginary units, each representing an axis of rotation (i for the x-axis, j for the y-axis, and k for the z-axis). The quaternion can also be represented as a 4x1 matrix. When using quaternions to represent an orientation or rotation, the unit quaternion (a quaternion with a magnitude of 1) is commonly used to ensure mathematical stability and avoid scaling issues. This means that the sum of the squares of the four components (a, b, c, and d) of the quaternion should be equal to 1.

These pieces of information can be sent in a message, for example in a container of a message to a further and/or surrounding entities 20 for further usage. Another receiving entity 20 can use the orientation information such as the antenna orientation to perform an angle of arrival (AoA) procedure. Once the position of the antenna 52 based on angle of arrival and ranging information is determined, this entity can also derive the orientation of the bounding box 50. Vehicles 10 are an exemplary application or use case for applying such a bounding box concept. The antenna orientation and bounding box concepts can be applied to any type of device 10.

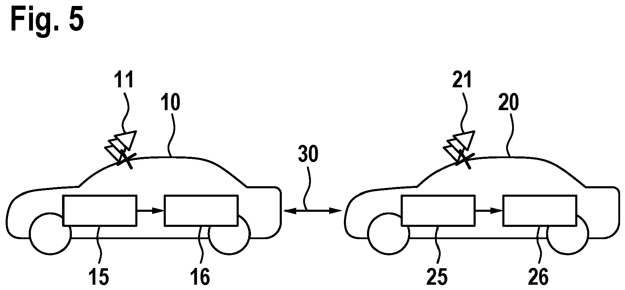

In Fig. 5 a schematic diagram of a further embodiment of the invention is shown. Fig. 5 depicts a vehicle 10 and a further vehicle 20. Each vehicle 10, 20 comprises an antenna system 11, 21 comprising a set of antennas 11, 21. Further the vehicle 10, 20 comprises a vehicle application 15, 25 and an access layer 16, 26. The access layer 16, 26 provides connectivity and enables communication for example via a network such as the communications network. Such a communication is depicted as communication link 30, which can enable communication between the vehicles 10, 20, in particular between the vehicle applications 15, 25. Therefore, as an example a message can be transmitted via the communication link 30 from the vehicle 10 to the further vehicle 20. The message comprises the position and the mapped orientation of the antenna 11. The mapped orientation of the antenna 11 can have a standardized format such as a measurement report comprising elements in a message container like for example the mapped antenna orientation information in relation to global coordinates in X, Y, Z and further coordinates like pitch, yaw, and roll, which can be transmitted as the 3D Degrees of Freedom (3DoF).

Further, the measurements report for conveying an antenna orientation comprise an Antenna Orientation measurement report. This report comprises the mapped orientation of the antenna in X, Y, Z and further pitch, yaw, and roll, and can be conveyed in a standardized RRC measurement reports targeting lower communication layers. This report can be transmitted periodically, or event triggered, like for example per request, if an orientation changes with a certain threshold.

Furthermore, the measurements report comprises an Antenna assisting information for validating and a useability of the antenna orientation information. A combination of this element is possible and advantageous with other standardized measurements associated with the orientation measurements indicating further antenna aspects assisting information such as antenna size, antenna types, or antenna shapes. This information can be transmitted with lower frequency than the orientation report or for example can be transmitted only once when positioning or beam management measurement is being considered. This report can be periodic, or event triggered (e.g., per request).

Finally, the measurement report comprises an Antenna orientation measurement time stamp. An exact time stamp or a relative time stamp of the reported orientation measurements can be utilized for example by a receiving entity 20 such as a vehicle 20 to indicate the validity, relevance, and/or exact orientation time for a valid angle of arrival calculation.

The above explanation of the embodiments describes the present invention in the context of examples. Of course, individual features of the embodiments can be freely combined with each other, provided that this is technically reasonable, without leaving the scope of the present invention.

**Claims**

1. A method (100) for enabling a positioning procedure, comprising the following steps at a device (10) in a communications network (1):

   - Determining (101) a position (52) and an orientation of an antenna (11) in relation to a reference point (51) and/or a reference mapping system (50) for the device (10), wherein the reference point (51) of the device (10) is defined by a reference position (51) based on the reference mapping system (50),
   - Mapping (102) the orientation of the antenna (11) in relation to an orientation of the device (10), wherein the orientation of the device (10) is specified by an orientation information based on the reference mapping system (50),
   - Generating (103) a message comprising the determined position and the mapped orientation of the antenna (11) of the device (10),
   - Transmitting (104) the message to at least one further entity (20) of the communications network (1) to enable a positioning procedure.

2. The method (100) according to claim 1, **characterized in that** during the determining (102) step the method (100) comprises at least one of the further steps:

   - Mapping spatial dimensions of the device (10) to the reference mapping system, wherein the spatial dimensions comprise a length, a width, and a height of the device (10),
   - Mapping the reference position (51) of the device (10) to the reference mapping system (50), wherein the reference position (51) is specified by a position comprising coordinates x, y, z.

3. The method (100) according to claim 1 or 2, **characterized in that** during the mapping (102) step the method (100) comprises at least one of the further steps:

   - Mapping the position (52) of the antenna to the reference position (51) of the reference mapping system (50), wherein the position (52) is specified by a coordinate and an offset in relation to the reference position (51) of the device (10),
   - Mapping the orientation of the antenna in relation to a horizontal plane of the reference mapping system (50) and a direction of movement of the device (10).

4. The method (100) according to any one of the preceding claims, **characterized in that** the message comprises an antenna orientation measurement report, wherein the antenna orientation measurement report comprises the mapped orientation of the antenna (11), and/or an antenna orientation measurement time stamp, and/or antenna assisting information such as an antenna type, an antenna size and/or an antenna model or the like.

5. The method (100) according to any one of the preceding claims, **characterized in that** the transmitting (104) of the message is carried out periodically and/or triggered by an event such as a request.

6. The method (100) according to any one of the preceding claims, **characterized in that** the reference mapping system (50) for the device (10) is based on an orientation mapping function (50) , wherein the orientation mapping function (50) specifies a mapping of the orientation of the antenna in relation to an orientation of the device (10) and/or a mapping of a position of the antenna (52) in relation to the device (10).

7. The method (100) according to any one of the preceding claims, **characterized in that** the reference mapping system (50) for the device (10) is based on a bounding box concept, wherein the bounding box (50) specifies the reference point (51) based on a coordinate of the bounding box (50) and/or wherein the bounding box (50) maps the spatial dimensions of the device (10) in relation to a length, a width, and a height of the device (10).

8. The method (100) according to claim 7, **characterized in that** the reference point (51) is based on a position in a coordinate system with a x-, y-, and/or z-axis.

9. The method (100) according to any one of the preceding claims, **characterized in that** the at least one further entity (20) comprises a node, a management function of the communications network, and/or a further device.

10. A Transmitting device (10) for enabling a positioning procedure, comprising an antenna (11), a transceiver, which is connected with the antenna, a memory and a processor, which is connected to the memory, the transceiver and the antenna, **characterized in that** the transmitting device (10) comprises a reference mapping system (50) of the transmitting device (10) and that the processor of the device (10) is configured to carry out any one of the steps of the method (100) according to one of the preceding claims.

11. A Receiving device (20) for enabling a positioning procedure, **characterized in that** the receiving device (20) is configured to carry out the following steps:

  - Extracting an orientation of an antenna (11) of a transmitting device (10) from a message transmitted (104) by the transmitting device (10) according to the steps of the method (100) according to one of claims 1 to 9,
  - Mapping the extracted orientation information based on an orientation mapping function (50) of the transmitting device (10),
  - Determining a relative position of the transmitting device (10) based on the mapped antenna orientation.

12. A computer program comprising instructions to cause

  - the transmitting device (10) according to claim 10 to execute the steps of the method (100) according to one of claims 1 to 9, and/or,
  - the receiving device (20) according to claim 11 to

    ∘ extract an orientation of an antenna (11) of a transmitting device (10) from a message transmitted (104) by the transmitting device (10) according to the steps of the method (100) according to one of claims 1 to 9,
    ∘ map the extracted orientation information based on an orientation mapping function (50) of the transmitting device (10), and
    ∘ determine a relative position of the transmitting device (10) based on the mapped antenna orientation.

13. A computer-readable medium having stored thereon the computer program of claim 12.

## Fig. 1

## Fig. 2

## Fig. 3

## Fig. 4

Fig. 5

Europäisches
Patentamt
European
Patent Office
Office européen
des brevets

# EUROPEAN SEARCH REPORT

**Application Number**

EP 23 19 0798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/034484 A2 (LENOVO SINGAPORE PTE LTD [SG]) 17 February 2022 (2022-02-17) * paragraph [0138] – paragraph [0139]; figure 6 * | 1-13 | INV. G01S5/02 G01S5/00 |
| Y | US 2023/138181 A1 (HUANG SU [CN]) 4 May 2023 (2023-05-04) * claim 1; figure 1 * | 1-13 | ADD. G01S3/00 B60W40/00 G08G1/16 |
| A | US 2022/039080 A1 (KHORYAEV ALEXEY [RU] ET AL) 3 February 2022 (2022-02-03) * the whole document * * paragraph [0138] – paragraph [0144]; figures 11-13 * | 1-13 | |

**TECHNICAL FIELDS SEARCHED (IPC)**

G01S
B60W
G08G
H04W

The present search report has been drawn up for all claims

| Place of search | Date of completion of the search | Examiner |
|---|---|---|
| Munich | 12 January 2024 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 0798**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-01-2024**

| Patent document cited in search report | | | Publication date | Patent family member(s) | | | Publication date |
|---|---|---|---|---|---|---|---|
| WO 2022034484 | A2 | | 17-02-2022 | AU | 2021325422 | A1 | 09-03-2023 |
| | | | | AU | 2021326057 | A1 | 09-03-2023 |
| | | | | BR | 112023002504 | A2 | 04-04-2023 |
| | | | | BR | 112023002513 | A2 | 04-04-2023 |
| | | | | CA | 3186407 | A1 | 17-02-2022 |
| | | | | CA | 3186670 | A1 | 17-02-2022 |
| | | | | CN | 116018867 | A | 25-04-2023 |
| | | | | CN | 116034285 | A | 28-04-2023 |
| | | | | CN | 116075738 | A | 05-05-2023 |
| | | | | EP | 4193166 | A2 | 14-06-2023 |
| | | | | EP | 4193167 | A2 | 14-06-2023 |
| | | | | EP | 4193731 | A1 | 14-06-2023 |
| | | | | JP | 2023537985 | A | 06-09-2023 |
| | | | | KR | 20230048332 | A | 11-04-2023 |
| | | | | KR | 20230050334 | A | 14-04-2023 |
| | | | | US | 2023296752 | A1 | 21-09-2023 |
| | | | | US | 2023305099 | A1 | 28-09-2023 |
| | | | | US | 2023309066 | A1 | 28-09-2023 |
| | | | | WO | 2022034483 | A2 | 17-02-2022 |
| | | | | WO | 2022034484 | A2 | 17-02-2022 |
| | | | | WO | 2022034485 | A1 | 17-02-2022 |
| US 2023138181 | A1 | | 04-05-2023 | CN | 115462137 | A | 09-12-2022 |
| | | | | EP | 4138469 | A1 | 22-02-2023 |
| | | | | JP | 2023523078 | A | 01-06-2023 |
| | | | | US | 2023138181 | A1 | 04-05-2023 |
| | | | | WO | 2021217457 | A1 | 04-11-2021 |
| US 2022039080 | A1 | | 03-02-2022 | CN | 111213393 | A | 29-05-2020 |
| | | | | EP | 3669557 | A1 | 24-06-2020 |
| | | | | US | 2022039080 | A1 | 03-02-2022 |
| | | | | WO | 2019036578 | A1 | 21-02-2019 |

EPO FORM P0459

For more details about this annex : see Official Journal of the European Patent Office, No. 12/82